# EUROPÄISCHE PATENTSCHRIFT

(11) **EP 2 114 226 B1**
(45) Veröffentlichungstag und Bekanntmachung des Hinweises auf die Patenterteilung: **14.12.2011**
(21) Anmeldenummer: 08701456.9
(22) Anmeldetag: 14.01.2008
(51) Int. Cl.: A47J 43/08, A47J 44/00

(54) **KÜCHENMASCHINE MIT DOPPELTER KUPPLUNGSEINRICHTUNG**
FOOD PROCESSOR HAVING A DUAL COUPLING DEVICE
MACHINE DE CUISINE COMPORTANT UN DISPOSITIF D'ACCOUPLEMENT DOUBLE

(30) Priorität: 01.02.2007 DE 102007005109
(43) Veröffentlichungstag der Anmeldung: 11.11.2009
(73) Patentinhaber: BSH Bosch und Siemens Hausgeräte GmbH, 81739 München (DE)
(72) Erfinder: ZIBRET, Igor, 3327 Smartno Ob Paki (SI); PAVLOVIC, Henrik, 3333 Ljubno Ob Savinji (SI); MAZEJ, Stanislav, 3303 Gomilsko (SI)
(86) Internationale Anmeldenummer: PCT/EP2008/050328
(87) Internationale Veröffentlichungsnummer: WO 2008/092726

(56) Entgegenhaltungen:
- DE-A1- 2 357 025
- DE-A1- 3 933 036
- DE-B- 1 173 981

## Beschreibung

### Hintergrund der Erfindung

Die vorliegende Erfindung betrifft eine Küchenmaschine mit einer ersten und einer zweiten von einem Motor der Küchenmaschine antreibbaren Kupplungseinrichtung gemäß dem Oberbegriff des Anspruchs 1.

### Stand der Technik

Aus der deutschen Offenlegungsschrift DE 39 33 036 A1 ist eine motorbetriebene Mehrzweckküchenmaschine mit zwei Achsanschlüssen bekannt, denen unterschiedliche Arbeitsbehälter und Verarbeitungswerkzeuge zugeordnet sind. Die Achsanschlüsse sind derart benachbart angeordnet, dass nur entweder der dem einen oder dem anderen Achsanschluss zugeordnete Arbeitsbehälter auf die Küchenmaschine aufgesetzt werden kann. Außerdem umfasst die bekannte Küchenmaschine eine Sicherheitseinrichtung, die die Inbetriebnahme der Küchenmaschine steuert und ihrerseits durch Betätigungsnocken an den Deckeln der Behälter gesteuert werden kann. Es ist also für beide Behälterdeckel eine gemeinsame Sicherheitseinrichtung vorgesehen. Die beiden Antriebsachsen werden durch Antriebsritzel angetrieben, wobei jedes Antriebsritzel über einen eigenen Antriebsriemen mit einem Antriebszahnrad auf der Motorachse in Antriebsverbindung steht.

**Weitere Küchengeräte sind in der** DE11 73 981B, DE23 57 025 und DE39 33 036 **offenbart.**

### Der Erfindung zugrunde liegende Aufgabe

Bei der bekannten Küchenmaschine kann es nachteilig sein, dass sie aufgrund des doppelten Riemenantriebs aufwendig in der Konstruktion ist und ein unangenehm starkes Arbeitsgeräusch verursacht. Der Erfindung liegt demnach die Aufgabe zugrunde, eine verbesserte Küchenmaschine bereitzustellen, die einfach konstruiert ist und leise arbeitet.

### Erfindungsgemäße Lösung

Zur Lösung der Aufgabe lehrt die vorliegende Erfindung eine Küchenmaschine mit den Merkmalen des Anspruchs 1. Dadurch, dass die Scheibe sowohl die erste als auch die zweite Kupplungseinrichtung antreibt, ist es durch die Erfindung vorteilhafterweise möglich, auf eine zweite direkte Ankopplung an den Motor zu verzichten. Insbesondere ist es mit der Erfindung möglich, eine Küchenmaschine bereitzustellen, bei der nur ein Riemenantrieb vorgesehen ist. Eine erfindungsgemäße Küchenmaschine kann vorteilhafterweise einfacher konstruiert sein und aufgrund des Verzichts einer direkten Anbindung der zweiten Kupplungseinrichtung ein geringeres Betriebsgeräusch verursachen. Es ist ein weiterer erreichbarer Vorteil der Erfindung, dass sie aufgrund der einfacheren Konstruktion weniger verschleißanfällig ist. Erfindungsgemäß weist die Scheibe einen nach innen gerichteten Zahnkranz auf. Vorzugsweise ist innerhalb des Zahnkranzes ein Zahnrad angeordnet, das in den Zahnkranz eingreift und um die zweite Kupplunaseinrichtung anzutreiben. Es ist ein erreichbarer Vorteil dieser Ausführung der Erfindung, dass die Scheibe, die die erste Kupplungseinrichtung antreibt, und das Zahnrad, das die zweite Kupplungseinrichtung antreibt, im Wesentlichen in einer Ebene anagordnet werden können. Dies kann insbesondere vorteilhaft die Bauhöhe der erfindungsgemäßen Küchenmaschine verringern.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Vorzugsweise ist das Zahnrad mit der zweiten Kupplungseinrichtung drehfest verbunden, um sie anzutreiben. Dies ermöglicht vorteilhafterweise einen besonders einfachen Aufbau der Küchenmaschine. Vorzugsweise wird durch den Zahnkranz und das Zahnrad ein Übersetzungsgetriebe realisiert mit einer Übersetzung, deren Übersetzungsverhältnis vorzugsweise zwischen 2 und 10, besonders vorzugsweise bei ca. 5 liegt. Es ist ein erreichbarer Vorteil dieser Ausführung der Erfindung, dass die Drehzahlen der Kupplungseinrichtungen so gewählt werden können, dass die erste Kupplungseinrichtung für Arbeitsgeräte geeignet ist, die eine niedrigere Drehzahl benötigen, zum Beispiel eine Rührschüssel mit einem Knetwerkzeug, und die zweite Kupplungseinrichtung für Bearbeitungsgeräte geeignet ist, die eine höhere Drehzahl benötigen, zum Beispiel einen Mixer.

In einer bevorzugten Ausführung der Erfindung steht die Scheibe über ein Zugmittel mit dem Motor in Antriebsverbindung. Das bevorzugte Zugmittel ist ein Riemen, besonders vorzugsweise ein Zahnriemen. Die Scheibe ist vorzugsweise eine Riemenscheibe, besonders vorzugsweise ein Zahnrad, in das der Zahnriemen eingreifen kann. Durch formschlüssige Kraftübertragung zwischen Zahnriemen und Zahnrad kann vorteilhafterweise einem Durchrutschen des Zahnriemens entgegengewirkt werden. Alternativ ist aber auch ein kraftschlüssiger Riemenantrieb denkbar, zum Beispiel mittels eines Flachriemens oder eines Keilriemens, bei denen das Drehmoment durch die an der Kontaktfläche zwischen Riemen und Riemenscheibe wirkenden Reibkräfte übertragen wird.

In einer anderen bevorzugten Ausführung der Erfindung steht die Scheibe über ein Zwischenzahnrad mit dem Motor in Antriebsverbindung. Es ist ein erreichbarer Vorteil dieser Ausführungsform, dass ein Durchrutschen eines Riemens vermieden werden kann. Weiterhin können lästige Geräusche, wie sie zum Beispiel durch Flattern eines Zahnriemens verursacht werden können, vermieden werden. Es ist ein weiterer erreichbarer Vorteil dieser Ausführung der Erfindung, dass Kräfte auf Motor und Gehäuse, die durch ein Spannen eines Zahnriemens verursacht werden können, vermieden werden. Dies kann sich vorteilhaft auf die Lebensdauer der Küchenmaschine auswirken.

Eine bevorzugte Küchenmaschine weist genau ein Zwischenzahnrad auf, das sowohl in die Scheibe als auch in ein mit der Achse des Motors drehfest verbundenes Antriebszahnrad eingreift. Dies ermöglicht vorteilhafterweise einen besonders einfachen Aufbau der Küchenmaschine. Es sind aber auch Ausführungen der Erfindung denkbar, bei denen die Scheibe und das Antriebszahnrad über mehrere Zwischenzahnräder miteinander in Verbindung stehen.

Der Motor zum Antreiben der Kupplungseinrichtungen ist vorzugsweise ein Elektromotor. Eine bevorzugte Küchenmaschine ist mit einem Schutzmechanismus ausgestattet, der eine Stromzufuhr zum Motor unterbrechen kann, wenn der Schutzmechanismus nicht von einem Betätigungsmittel eines an eine Kupplungseinrichtung angekuppelten Bearbeitungsgeräts betätigt wird. Mit Hilfe des Schutzmechanismus kann vorteilhafterweise einer Verletzungsgefahr aufgrund eines nicht ordnungsgemäß an der Küchenmaschine angebrachten Bearbeitungsgeräts entgegengewirkt werden.

Eine bevorzugte Küchenmaschine umfasst mindestens ein erstes Bearbeitungsgerät, das an die erste Kupplungseinrichtung ankuppelbar ist, um es anzutreiben, und das mit einem Betätigungsmittel ausgestattet, das den Schutzmechanismus betätigen kann. Sie weist außerdem vorzugsweise mindestens ein zweites Bearbeitungsgerät auf, das an die zweite Kupplungseinrichtung ankuppelbar ist, um es anzutreiben, und das mit einem Betätigungsmittel ausgestattet, das den Schutzmechanismus betätigen kann. Vorzugsweise können beide Betätigungsmittele den gleichen Schutzmechanismus betätigen. Ein erreichbarer Vorteil dieser Ausführung der Erfindung ist, dass eine Küchenmaschine mit einem Schutzmechanismus für mehrere Bearbeitungsgeräte bereitgestellt werden kann. Dies kann die Konstruktion der Küchenmaschine vereinfachen.

Ein bevorzugter Schutzmechanismus umfasst einen Schalter. Der Schalter ist vorzugsweise in einer Nische am Gehäuse der Küchenmaschine angebracht. Vorzugsweise umfasst das Bearbeitungsgerät als Betätigungsmittel einen Nocken, der in die Nische eingreifen kann, um den Schalter zu betätigen. Dadurch, dass der Schalter in einer Nische angeordnet ist, kann vorteilhafterweise erreicht werden, dass er für den Benutzer von außen nicht ohne weiteres zugänglich ist, um den Benutzer daran zu hindern, den Sicherheitsmechanismus zu umgehen.

Ein bevorzugtes Bearbeitungsgerät umfasst einen Deckel zum Schließen des Bearbeitungsgeräts. Der Deckel ist vorzugsweise mit einem Betätigungsmittel ausgestattet, um den Schutzmechanismus zu betätigen, wenn das Bearbeitungsgerät mit aufgesetztem Deckel auf das Gehäuse der Küchenmaschine aufgesetzt ist. Mit dieser Ausführung der Erfindung kann vorteilhafterweise erreicht werden, dass das Bearbeitungsgerät an der Küchenmaschine nur betrieben werden kann, wenn es mit einem Deckel verschlossen ist. Auf diese Weise kann vermieden werden, dass ein in dem Bearbeitungsgerät rotierendes Werkzeug für einen Benutzer von außen zugänglich ist und eine Verletzungsgefahr darstellt.

Das Gehäuse der Küchenmaschine weist vorzugsweise mindestens eine Kupplungsstelle auf, auf die das jeweilige Bearbeitungsgeräte zum Ankuppeln an die ihm zugeordnete Kupplungseinrichtung aufgesetzt werden kann. Eine bevorzugte Ausführung der Erfindung umfasst mindestens ein Bearbeitungsgerät, das auf das Gehäuse der Küchenmaschine aufsetzbar ist, um es mittels einer der Kupplungseinrichtungen anzutreiben, wobei das Bearbeitungsgerät so ausgebildet ist und die erste und zweite Kupplungseinrichtung relativ zueinander so angeordnet sind, dass beide Kupplungseinrichtungen bei aufgesetztem Bearbeitungsgerät von diesem abgedeckt werden. Es ist ein erreichbarer Vorteil dieser Ausführung der Erfindung, dass bei aufgesetztem Bearbeitungsgerät beide Kupplungseinrichtungen für einen Benutzer unzugänglich sind, und so eine Verletzungsgefahr vermieden wird. Besonders vorzugsweise ist das Bearbeitungsgerät, das auf das Gehäuse der Küchenmaschine aufsetzbar ist, um durch die Kupplungseinrichtung angetrieben zu werden, so ausgebildet, dass es, wenn es auf das Gehäuse der Küchenmaschine aufgesetzt ist, auch die zweite Kupplungseinrichtung abdeckt. Dies kann den Vorteil haben, dass eine Verletzungsgefahr durch die sich schneller drehende zweite Kupplungseinrichtung vermieden wird.

Eine bevorzugte Küchenmaschine umfasst als Bearbeitungsgerät eine Rührschüssel. Die bevorzugte Rührschüssel umfasst ein in der Rührschüssel angeordnetes Werkzeug, das mittels einer Kupplungseinrichtung rotierend antreibbar ist, wenn die Rührschüssel auf das Gehäuse der Küchenmaschine aufgesetzt ist. Das Werkzeug der Rührschüssel ist vorzugsweise mittels der ersten Kupplungseinrichtung rotierend antreibbar. Bevorzugte Werkzeuge sind Knethaken, Rührbesen oder Messer. Es ist ein erreichbarer Vorteil dieser Ausführung der Erfindung, dass die Küchenmaschine als Knetwerk, Mischwerk, Schlagwerk oder Zerkleinerungswerk einsetzbar ist.

In einer bevorzugten Ausführung umfasst die erfindungsgemäße Küchenmaschine einen Mixbecher als Bearbeitungsgerät. Der bevorzugte Mixbecher umfasst ein in dem Mixbecher angeordnetes Messer als Bearbeitungswerkzeug, das mittels einer Kupplungseinrichtung rotierend antreibbar ist, wenn der Mixbecher auf das Gehäuse der Küchenmaschine aufgesetzt ist. Das Messer ist vorzugsweise mittels der zweiten Kupplungseinrichtung rotierend antreibbar. Die zweite Kupplungseinrichtung kann wegen ihrer höheren Geschwindigkeit zum Mixen besonders geeignet sein. Es ist ein erreichbarer Vorteil dieser Ausführung der Erfindung, dass die Küchenmaschine auch als Mixer eingesetzt werden kann.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig.1:: Eine perspektivische Ansicht der erfindungsgemäßen Küchenmaschine von außen mit einer aufgesetzten Rührschüssel als Bearbeitungsgerät;
- Fig. 2:: Eine perspektivische Ansicht der erfindungsgemäßen Küchenmaschine von außen mit einem aufgesetzten Mixbecher als Bearbeitungsgerät;
- Fig. 3:: Eine perspektivische teilweise Aufrissdarstellung der erfindungsgemäßen Küchenmaschine mit einer mittels eines Riemenantriebs angetriebenen ersten und mittels eines Zahnrads angetriebenen zweiten Kupplungseinrichtung.

### Ausführliche Beschreibung eines Ausführungsbeispiels

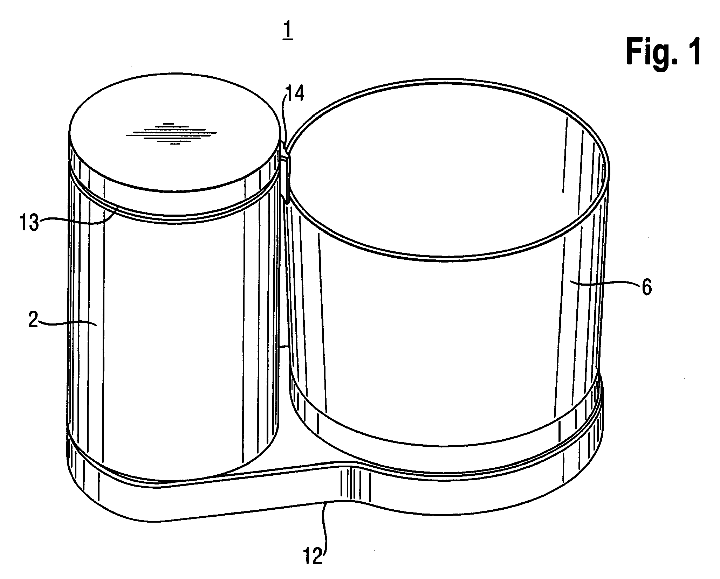

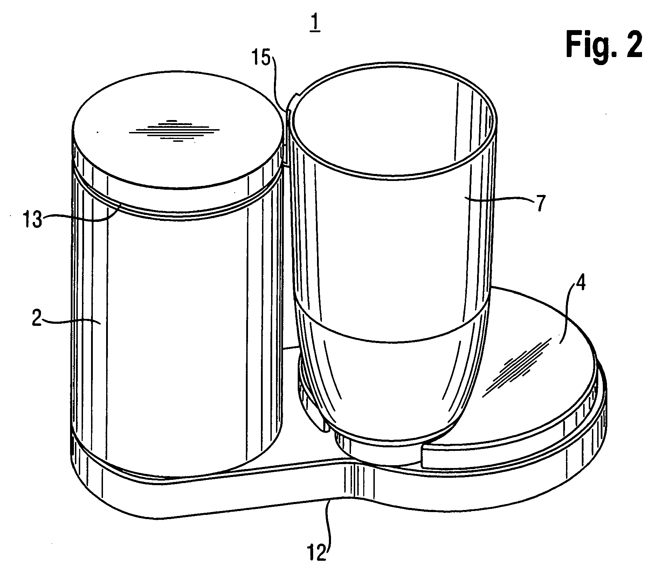

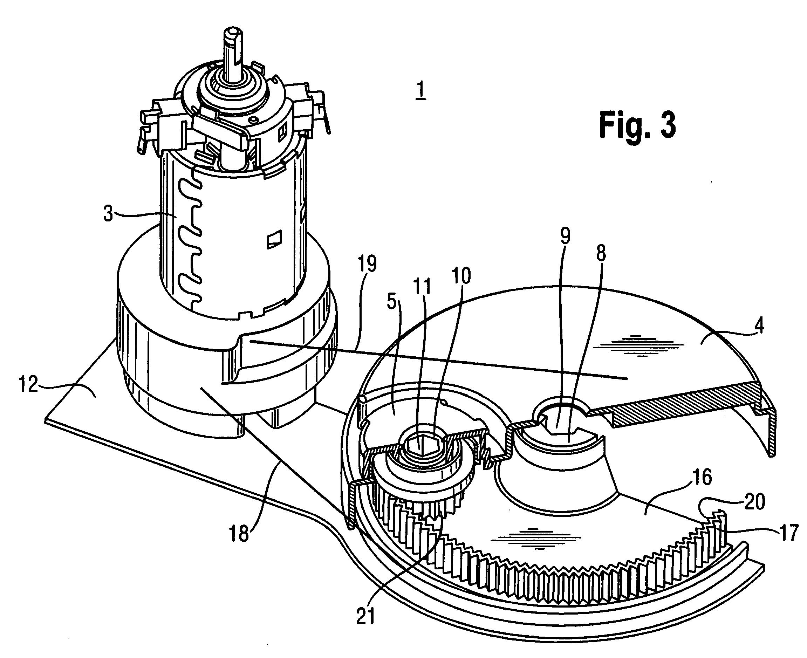

Die in Fig. 1 dargestellte Küchenmaschine 1 weist einen ersten im Wesentlichen zylinderförmigen Gehäuseteil 2 auf, in dem ein in Fig. 3 dargestellter Elektromotor 3 zum Antreiben der Küchenmaschine 1 untergebracht ist. Im unteren Gehäuseteil sind, wie ebenfalls in Fig. 3 ersichtlich, Aufnahmestellen 4 und 5 für Bearbeitungsgeräte 6 und 7 vorgesehen. In Fig. 1 ist eine Rührschüssel 6 als Bearbeitungsgerät auf die Aufnahmestelle 4 aufgesetzt und in Fig. 2 ist ein Mixbecher 7 als Bearbeitungsgerät auf die Aufnahmestelle 5 aufgesetzt.

Ein nicht dargestelltes Werkzeug in der Rührschüssel 6 wird durch eine Kupplungseinrichtung 8, die in der Mitte der Aufnahmestelle 4 von außen zugänglich ist, rotierend angetrieben. Die Kupplungseinrichtung 8 ist hierzu als weibliches Kupplungselement mit einer Öffnung 9 mit sechskantigem Querschnitt ausgeführt, in das eine Welle der Rührschüssel 6, die das Werkzeug der Rührschüssel 6 antreibt und einen entsprechenden sechskantigen Querschnitt aufweist, eingreifen kann. Die Rührschüssel 4 umfasst Knethaken und Rührbesen als auswechselbare Werkzeuge (nicht dargestellt). Die zweite Aufnahmestelle 5 ist innerhalb der ersten Aufnahmestelle 4 angeordnet, und weist in ihrer Mitte ebenfalls eine Kupplungseinrichtung 10 mit einem weiblichen Kupplungselement mit einer Öffnung 11 mit sechskantigem Querschnitt auf, in das eine Welle des Mixbechers 7 eingreifen kann, die das Messer in dem Mixbecher 7 rotierend antreibt. Beide Kupplungseinrichtungen 8 und 10 sind im Wesentlichen auf gleicher Höhe bezüglich einer Bodenplatte 12 der Küchenmaschine 1 angeordnet.

Die Küchenmaschine 1 umfasst außerdem als Sicherheitseinrichtung einen Schalter, der in einem den Bearbeitungsgeräten 6 und 7 am nächsten liegenden Bereich einer umlaufenden Kerbe 13 im oberen Bereich des zylindrischen Gehäuseteils 2 etwas zurückgesetzt angeordnet ist. Die Rührschüssel 6 und der Mixbecher 7 sind jeweils mit einer Nocke 14 und 15 ausgestattet, die in die Kerbe 13 eingreift, und den Schalter betätigt, wenn die Rührschüssel 6 oder der Mixbecher 7 ordnungsgemäß an der jeweiligen Aufnahmestelle 4 bzw. 5 angebracht ist. Der Schalter steuert die Stromzufuhr zum Motor 3 derart, dass der Motor 3 nur mit Strom versorgt werden kann, wenn der Schalter durch eine der Nocken 14 oder 15 betätigt wird.

Wie in Fig. 3 zu sehen, wird die Kupplungseinrichtung 8 der Küchenmaschine 1 mittels einer mit ihr einstückig verbundenen Scheibe 16 angetrieben, die als Zahnrad mit einem äußeren Zahnkranz 17 ausgestattet ist. Der äußere Zahnkranz wird durch einen in Fig. 3 nur durch Linien 18 und 19 angedeuteten Zahnriemen über ein in den Figuren nicht dargestelltes Zahnrad auf der Welle des Motors 3 von letzterem angetrieben. Die Scheibe 16 weist außerdem eine Innenverzahnung 20 auf, in die ein kleineres Zahnrad 21 eingreift, das einstückig mit der Kupplungseinrichtung 10 verbunden ist, um diese anzutreiben. Scheibe 16 und Zahnrad 21 bilden ein Übersetzungsgetriebe mit einem Übersetzungsverhältnis von ungefähr 5, so dass sich die Kupplungseinrichtung 10 ungefähr fünfmal so schnell dreht wie die Kupplungseinrichtung 8.

Die Küchenmaschine ist vorteilhaft einfach konstruiert, wenig verschleißanfällig und verursacht aufgrund des Verzichts einer direkten Anbindung der zweiten Kupplungseinrichtung ein geringes Betriebsgeräusch.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Küchenmaschine (1) mit einer ersten (8) und einer zweiten von einem Motor der Küchenmaschine (1) antreibbaren Kupplungseinrichtung (10) zum Ankuppeln an ein Bearbeitungsgerät (6), um es anzutreiben, wobei die erste Kupplungseinrichtung (8) drehfest mit einer Scheibe (16) eines Getriebes gekoppelt ist, das die erste Kupplungseinrichtung (8) antreibt, wobei die Scheibe (16) auch die zweite Kupplungseinrichtung (10) antreibt, **dadurch gekennzeichnet, dass** die Scheibe (16) einen nach innen gerichteten Zahnkranz (20) aufweist, in den ein innerhalb des Zahnkranzes (20) angeordnetes Zahnrad (21) eingreift, um die zweite Kupplungseinrichtung (10) anzutreiben.

2. Küchenmaschine (1) nach Anspruch 1 **dadurch gekennzeichnet, dass** das Zahnrad (21) mit der zweiten Kupplungseinrichtung (10) drehfest verbunden ist, um sie anzutreiben.

3. Küchenmaschine (1) nach einem der vorherigen Ansprüche, **dadurch gekennzeichnet, dass** die Scheibe (16) über ein Zugmittel (18, 19) mit dem Motor (3) in Antriebsverbindung steht.

4. Küchenmaschine (1) nach einem der Ansprüche 1 bis 2 **dadurch gekennzeichnet, dass** die Scheibe (16) über ein Zwischenzahnrad mit dem Motor (3) in Antriebsverbindung steht.

5. Küchenmaschine (1) nach einem der vorherigen Ansprüche, **dadurch gekennzeichnet, dass** sie mit einem Schutzmechanismus ausgestattet ist, der eine Stromzufuhr zum Motor (3) unterbrechen kann, wenn der Schutzmechanismus nicht von einem Betätigungsmittel (14, 15) eines an eine Kupplungseinrichtung (8, 10) angekuppelten Bearbeitungsgeräts (6, 7) betätigt wird.

6. Küchenmaschine (1) nach Anspruch 5 **dadurch gekennzeichnet, dass** sie ein erstes Bearbeitungsgerät (6) umfasst, das an die erste Kupplungseinrichtung (8) ankuppelbar ist, um es anzutreiben, und ein zweites Bearbeitungsgerät (7), das an die zweite Kupplungseinrichtung (10) ankuppelbar ist, um es anzutreiben, und beide Bearbeitungsgeräte (6, 7) mit einem Betätigungsmittel (14, 15) ausgestattet sind, das den Schutzmechanismus betätigen kann.

7. Küchenmaschine (1) nach Anspruch 6 5 oder 6, **dadurch gekennzeichnet, dass** der Schutzmechanismus einen in einer Nische (13) am Gehäuse der Küchenmaschine (1) angebrachten Schalter umfasst, und das Bearbeitungsgerät (6, 7) als Betätigungsmittel (14, 15) einen Nocken umfasst, der in die Nische (13) eingreifen kann, um den Schalter zu betätigen.

8. Küchenmaschine (1) nach einem der Ansprüche 5 bis 7, **dadurch gekennzeichnet, dass** sie mindestens ein Bearbeitungsgeräte (6, 7) mit einem Deckel zum Schließen des Bearbeitungsgeräts (6, 7) umfasst und der Deckel mit dem Betätigungsmitte (14, 15) ausgestattet ist, um den Schutzmechanismus zu betätigen, wenn das Bearbeitungsgerät (6, 7) mit aufgesetztem Deckel auf das Gehäuse der Küchenmaschine (1) aufgesetzt ist.

9. Küchenmaschine (1) nach einem der vorherigen Ansprüche, **dadurch gekennzeichnet, dass** sie mindestens ein Bearbeitungsgerät (6) umfasst, das auf das Gehäuse der Küchenmaschine (1) aufsetzbar ist, um es mittels einer der Kupplungseinrichtungen (8) anzutreiben, wobei das Bearbeitungsgerät (6) so ausgebildet und die erste (8) und zweite Kupplungseinrichtung (10) relativ zueinander so angeordnet sind, dass beide Kupplungseinrichtungen (8, 10) bei aufgesetztem Bearbeitungsgerät (6) von diesem abgedeckt sind.

10. Küchenmaschine (1) nach einem der vorherigen Ansprüche, **dadurch gekennzeichnet, dass** sie als Bearbeitungsgerät (6) eine Rührschüssel mit einem in der Rührschüssel angeordneten Werkzeug umfasst, das mittels der ersten Kupplungseinrichtung (8) rotierend antreibbar ist, wenn die Rührschüssel auf das Gehäuse der Küchenmaschine (1) aufgesetzt ist.

11. Küchenmaschine (1) nach einem der vorherigen Ansprüche, **dadurch gekennzeichnet, dass** sie als Bearbeitungsgerät (7) einen Mixbecher mit einem in dem Mixbecher angeordneten Messer umfasst, das mittels der zweiten Kupplungseinrichtung (10) rotierend antreibbar ist, wenn der Mixbecher auf das Gehäuse der Küchenmaschine (1) aufgesetzt ist.

## Claims

1. Food processor (1) with a first coupling device (8) and second coupling device (10), which are drivable by a motor of the food processor (1), for coupling to a processing appliance (6) in order to drive it, wherein the first coupling device (8) is coupled in rotationally fast manner with a disc (16) of a transmission which drives the first coupling device (8), wherein the disc (16) also drives the second coupling device (10), **characterised in that** the disc (16) has an inwardly oriented gear rim (20) in which a gearwheel (21) arranged within the gear rim (20) engages in order to drive the second coupling device (10).

2. Food processor (1) according to claim 1, **characterised in that** the gearwheel (21) is connected in rotationally fast manner with the second coupling device (10) in order to drive it.

3. Food processor (1) according to one of the preceding claims, **characterised in that** the disc (16) is in drive connection with the motor (3) by way of a traction means (18,19).

4. Food processor (1) according to one of claims 1 and 2, **characterised in that** the disc (16) is in drive connection with the motor (3) by way of an intermediate gearwheel.

5. Food processor (1) according to any one of the preceding claims, **characterised in that** it is equipped with a protective mechanism which can interrupt a current feed to the motor (3) when the protective mechanism is not actuated by an actuating means (14, 15) of a processing appliance (6, 7) coupled to a coupling device (8, 10).

6. Food processor (1) according to claim 5, **characterised in that** it comprises a first processing appliance (6) which is couplable to the first coupling device (8) in order to drive it and a second processing appliance (7) which is couplable to the second coupling device (10) in order to drive it and the two processing appliances (6, 7) are equipped with an actuating means (14, 15) which can actuate the protective mechanism.

7. Food processor (1) according to claim 5 or 6, **characterised in that** the protective mechanism comprises a switch mounted in a niche (13) at the housing of the food processor (1) and the processing appliance (6, 7) comprises, as actuating means (14, 15), a cam which can engage in the niche (13) in order to actuate the switch.

8. Food processor (1) according to any one of claims to 5 to 7, **characterised in that** it comprises at least one processing appliance (6, 7) with a lid for closing the processing appliance (6, 7) and the lid is equipped with the actuating means (14, 15) in order to actuate the protective mechanism when the processing appliance (6, 7) with fitted lid is placed on the housing of the food processor (1 ).

9. Food processor (1) according to any one of the preceding claims, **characterised in that** it comprises at least one processing appliance (6) which is placeable on the housing of the food processor (1) in order to drive it by means of one of the coupling devices (8), wherein the processing appliance (6) is so constructed and the first coupling device (8) and second coupling device (10) are so arranged relative to one another that the two coupling devices (8, 10) are covered by the processing appliance (6) when this is placed on.

10. Food processor (1) according to any one of the preceding claims, **characterised in that** it comprises, as processing appliance (6), a stirring bowl with a tool which is arranged in the stirring bowl and which is rotationally drivable by means of the first coupling device (8) when the stirring bowl is placed on the housing of the food processor (1).

11. Food processor (1) according to any one of the preceding claims, **characterised in that** it comprises, as processing appliance (7), a mixing beaker with a knife which is arranged in the mixing beaker and which is rotationally drivable by means of the second coupling device (10) when the mixing beaker is placed on the housing of the food processor (1).

## Revendications

1. Machine de cuisine (1) comprenant un premier (8) et un second dispositif d'accouplement (10) pouvant être entraîné par un moteur de la machine de cuisine (1), servant à l'accouplement à un appareil de traitement (6) dans le but d'entraîner celui-ci, le premier dispositif d'accouplement (8) étant couplé d'une manière empêchant une torsion, à un disque (16) d'une transmission qui entraîne le premier dispositif d'accouplement (8), le disque (16) entraînant aussi le second dispositif d'accouplement (10), **caractérisée en ce que** le disque (16) est pourvu d'une couronne dentée (20) dirigée vers l'intérieur dans laquelle s'engrène une roue dentée (21) située à l'intérieur de la couronne dentée (20) pour entraîner le second dispositif d'accouplement (10).

2. Machine de cuisine (1) selon la revendication 1, **caractérisée en ce que** la roue dentée (21) est reliée au second dispositif d'accouplement (10) d'une manière empêchant une torsion pour l'entraîner.

3. Machine de cuisine (1) selon l'une des revendications précédentes, **caractérisée en ce que** le disque (16) est en liaison d'entraînement avec le moteur (3) par le biais d'un moyen de traction (18, 19).

4. Machine de cuisine (1) selon l'une des revendications 1 à 2, **caractérisée en ce que** le disque (16) est en liaison d'entraînement avec le moteur (3) par le biais d'une roue dentée intermédiaire.

5. Machine de cuisine (1) selon l'une des revendications précédentes, **caractérisée en ce qu'**elle est équipée d'un mécanisme de protection qui peut interrompre l'alimentation en courant du moteur (3) lorsque le mécanisme de protection n'est pas actionné par un moyen d'actionnement (14, 15) d'un appareil de traitement (6, 7) accouplé à un dispositif d'accouplement (8, 10).

6. Machine de cuisine (1) selon la revendication 5, **caractérisée en ce qu'**elle comprend un premier appareil de traitement (6) qui peut être accouplé au premier dispositif d'accouplement (8) pour être entraîné et un second appareil de traitement (7) qui peut être accouplé au second dispositif d'accouplement (10) pour être entraîné, et les deux appareils de traitement (6, 7) sont pourvus d'un moyen d'actionnement (14, 15) qui peut actionner le mécanisme de protection.

7. Machine de cuisine (1) selon la revendication 5 ou 6, **caractérisée en ce que** le mécanisme de protection comprend un interrupteur logé dans une rainure (13) sur le boîtier de la machine de cuisine (1) et l'appareil de traitement (6, 7) est pourvu, en tant que moyen d'actionnement (14, 15), d'une saillie qui peut s'enclencher dans la rainure (13) pour actionner l'interrupteur.

8. Machine de cuisine (1) selon l'une des revendications 5 à 7, **caractérisée en ce qu'**elle comprend au moins un appareil de traitement (6, 7) muni d'un couvercle pour fermer l'appareil de traitement (6, 7) et le couvercle est pourvu du moyen d'actionnement (14, 15) pour actionner le mécanisme de protection lorsque l'appareil de traitement (6, 7), muni du couvercle, est placé sur le boîtier de la machine de cuisine (1).

9. Machine de cuisine (1) selon l'une des revendications précédentes, **caractérisée en ce qu'**elle comprend au moins un appareil de traitement (6) qui peut être placé sur le boîtier de la machine de cuisine (1) pour être entraîné par un des dispositifs d'accouplement (8), l'appareil de traitement (6) étant exécuté et le premier (8) et le second dispositif d'accouplement (10) étant disposés l'un par rapport à l'autre de manière à ce que les deux dispositifs d'accouplement (8, 10) soient couverts par l'appareil de traitement (6) lorsque celui-ci est placé sur la machine.

10. Machine de cuisine (1) selon l'une des revendications précédentes, **caractérisée en ce qu'**elle comprend, en tant qu'appareil de traitement (6), un bol mélangeur dans lequel se trouve un outil qui peut être entraîné en rotation grâce au premier dispositif d'accouplement (8) lorsque le bol mélangeur est placé sur le boîtier de la machine de cuisine (1).

11. Machine de cuisine (1) selon l'une des revendications précédentes, **caractérisée en ce qu'**elle comprend, en tant qu'appareil de traitement (7), un bol mixeur dans lequel se trouve un couteau qui peut être entraîné en rotation grâce au second dispositif d'accouplement (10) lorsque le bol mixeur est placé sur le boîtier de la machine de cuisine (1).
